# EUROPEAN PATENT APPLICATION

(11) **EP 4 718 592 A1**
(43) Date of publication of application: **01.04.2026**
(21) Application number: 24811148.6
(22) Date of filing: 22.05.2024
(51) Int. Cl.: H01M 50/105, H01M 10/0562, H01M 50/117, H01M 50/119, H01M 50/121, H01M 50/122, H01M 50/126, H01M 50/131

(54) **EXTERIOR MATERIAL FOR POWER STORAGE DEVICE AND POWER STORAGE DEVICE**

(30) Priority: 23.05.2023 JP 2023084484
(71) Applicant: Toppan Holdings Inc., Tokyo 110-0016 (JP)
(72) Inventor: MURATA, Koji, Tokyo 110-0016 (JP)
(74) Representative: Hoffmann Eitle
(86) International application number: PCT/JP2024/018873
(87) International publication number: WO 2024/242142

(57) **Abstract**

A power storage device packaging material at least includes a substrate layer, a barrier layer including a metal layer, an adhesive layer, and a sealant layer in this order. The adhesive layer contains a hydrophobic insulating inorganic filler. The content of the hydrophobic insulating inorganic filler in the adhesive layer may be 0.5 to 20 mass%.

## Description

### [Technical Field]

The present disclosure relates to a power storage device packaging material and a power storage device.

### [Background Art]

Secondary batteries such as lithium-ion batteries are widely used in mobile electronic devices, electric vehicles and hybrid electric vehicles using electricity as a power source, and the like. A lithium-ion battery typically includes a battery cell that includes a positive electrode and a negative electrode, and a packaging bag that houses the battery cell, the packaging bag being composed of a packaging material.

Such a lithium secondary battery may have a large battery capacity or handle a large current, and thus requires a packaging material having better insulating properties to ensure higher safety.

For example, in order to obtain a battery packaging material having good insulating properties, PTL 1 proposes a battery packaging material in which an outer layer including a heat-resistant resin film, a metal foil layer, an adhesive layer, and an inner layer including a thermoplastic resin film are laminated. In the battery packaging material, the adhesive layer contains insulating particles, the insulating particles are either one of inorganic particles having an average particle size of 0.1 µm to 4 µm and organic particles having an average particle size of 0.1 µm to 4 µm, or a mixture thereof, and the amount of insulating particles in the adhesive layer is 1 to 30 mass%.

### [Citation List]

### [Patent Literature]

PTL 1: JP 2014-127258 A

### [Summary of the Invention]

### [Technical Problem]

Lithium secondary batteries include solid-state batteries containing a solid electrolyte as an electrolyte. A power storage device such as a solid-state battery may be restrained while pressure is applied via a packaging material in a direction perpendicular to the surface of a battery cell including a positive electrode, a solid electrolyte, and a negative electrode. The power storage device is restrained to obtain higher adhesion between the positive electrode or the negative electrode and the solid electrolyte to achieve lower resistance between the positive electrode or the negative electrode and the solid electrolyte, exhibiting and maintaining sufficient battery performance of the power storage device.

However, when the packaging material described in PTL 1 is used as a packaging bag for a battery cell, in some cases, the battery cell may be heated, and if pressure is applied to the packaging material while heat is applied for a long time, a sealant layer may be compressed and flow, and this may result in a short circuit between a metal layer of the packaging material and the positive electrode or the negative electrode of the battery cell. Thus, the packaging material described in PTL 1 has room for improvement in insulating properties when the packaging material is used as a packaging bag in a power storage device under heat and pressure.

The present disclosure has been made in view of the above problem, and an object of the present disclosure is to provide a power storage device packaging material having good insulating properties when the packaging material is used as a packaging bag in a power storage device under heat and pressure, and a power storage device.

### [Solution to Problem]

In order to solve the above problem, the present disclosure provides a power storage device packaging material for a power storage device, the power storage device packaging material at least including a substrate layer, a barrier layer including a metal layer, an adhesive layer, and a sealant layer in this order, wherein the adhesive layer contains a hydrophobic insulating inorganic filler.

The packaging material has good insulating properties when the packaging material is used as a packaging bag in a power storage device under heat and pressure.

The inventors of the present disclosure presume that the reasons for the above effect are as follows.

That is, in general, the adhesive layer is a viscous fluid when heat and pressure are applied for a long time; however, in the packaging material of the present disclosure, the adhesive layer is adjacent to the barrier layer including the metal layer, and thus due to friction with the barrier layer, the adhesive layer is less likely to flow than the sealant layer. Furthermore, the hydrophobic insulating inorganic filler having hydrophobicity has higher compatibility with other components in the adhesive layer, leading to a higher cohesive force of the adhesive layer. Therefore, the adhesive layer is less likely to flow when heat and pressure are applied to the adhesive layer. Furthermore, the adhesive layer contains the hydrophobic insulating inorganic filler; thus, the surface of the adhesive layer on the sealant layer side is more likely to be uneven, and a larger area of contact between the adhesive layer and the sealant layer leads to higher adhesion between the adhesive layer and the sealant layer. Therefore, the sealant layer is less likely to flow when heat and pressure are applied to the sealant layer. As a result, the adhesive layer and the sealant layer are less likely to flow when heat and pressure are applied to the packaging material. Furthermore, a hydrophobic insulating inorganic filler is less likely to be deformed than an insulating organic filler when heat and pressure are applied for a long time. Even if the adhesive layer is compressed by application of heat and pressure, the adhesive layer and the sealant layer (hereinafter also collectively referred to as an "insulating layer") can ensure at least some thickness due to the size of the hydrophobic insulating inorganic filler. Furthermore, moisture having electrical conductivity is less likely to be adhered to the hydrophobic insulating inorganic filler; thus, it is possible to prevent reduction in electrical resistance of the adhesive layer, preventing the adhesive layer from having poor insulating properties.

The inventors of the present disclosure presume that for the above reasons, the packaging material has good insulating properties when the packaging material is used as a packaging bag for a battery cell of a power storage device under heat and pressure.

The power storage device packaging material is preferably configured such that the adhesive layer is composed of a composition containing the hydrophobic insulating inorganic filler, the composition containing the hydrophobic insulating inorganic filler, a resin, and a polyfunctional isocyanate compound, and the resin is a modified polyolefin resin.

In this case, due to a reaction between the modified polyolefin resin and the polyfunctional isocyanate compound contained in the composition, the adhesive layer composed of the composition is less likely to flow when heat and pressure are applied for an extended period of time, making it possible to more sufficiently prevent compression of the insulating layer including the adhesive layer. Therefore, the packaging material can have better insulating properties when the packaging material is used as a packaging bag for a battery cell of a power storage device under heat and pressure.

The adhesive layer is composed of the composition containing a modified polyolefin resin, and thus has higher adhesion to the barrier layer and the sealant layer.

Furthermore, the composition further contains a polyfunctional isocyanate compound, and thus achieves better moisture barrier properties while achieving higher sealing strength.

The power storage device packaging material is preferably configured such that the sealant layer has an MFR of 20 g/10 min or less.

In the case where the MFR of the sealant layer is 20 g/10 min or less so that the sealant layer is less likely to flow under heat and pressure, when the packaging material is used as a packaging bag under heat and pressure, the sealant layer is less likely to be compressed, ensuring a sufficient thickness of the insulating layer including the sealant layer and achieving better insulating properties.

The power storage device packaging material is preferably configured such that the sealant layer has a melting point of 160°C or higher.

When the melting point of the sealant layer is 160°C or higher, it is possible to sufficiently prevent the sealant layer from flowing under heat and pressure. This makes it possible to more sufficiently prevent compression of the insulating layer including the adhesive layer. Therefore, the packaging material can have better insulating properties when the packaging material is used as a packaging bag for a battery cell of a power storage device under heat and pressure.

The power storage device packaging material is preferably configured such that the hydrophobic insulating inorganic filler has an average particle size of 1 to 20 µm.

In this case, the packaging material can have better insulating properties when the packaging material is used as a packaging bag for a battery cell of a power storage device under heat and pressure, as compared with the case where the average particle size of the hydrophobic insulating inorganic filler is less than 1 µm. Furthermore, the hydrophobic insulating inorganic filler can maintain a good dispersion state in the composition, and reduction in the cohesive force of the adhesive layer is suppressed; thus, reduction in the adhesion strength of the adhesive layer to the barrier layer and the sealant layer is suppressed, and reduction in sealing strength of the sealant layer is also suppressed.

The power storage device packaging material is preferably configured such that a breakdown voltage after heat and pressure are applied for 24 hours under conditions of 150°C and 3 MPa is 100 V or more.

In this case, even under severe heat and pressure conditions, the packaging material can have better insulating properties when the packaging material is used as a packaging bag for a battery cell of a power storage device under heat and pressure.

The power storage device packaging material is preferably configured such that the modified polyolefin resin is an acid-modified polyolefin resin.

In the packaging material, the adhesive layer has higher adhesion to the barrier layer, and is less likely to flow when heat and pressure are applied to the packaging material. Furthermore, the higher adhesion of the adhesive layer to the barrier layer leads to higher heat resistance.

The power storage device packaging material is preferably configured such that the polyfunctional isocyanate compound contains an isocyanurate-type polyfunctional isocyanate compound.

In the packaging material, the polyfunctional isocyanate compound containing an isocyanurate enables the adhesive layer to have high adhesion and heat resistance, achieving high sealing strength and heat resistance and good barrier properties.

The power storage device packaging material is preferably configured such that a content of the hydrophobic insulating inorganic filler in the adhesive layer is 0.5 to 20 mass%.

In this case, the insulating layer including the adhesive layer is more likely to maintain a uniform thickness when the packaging material is used as a packaging bag for a battery cell of a power storage device under heat and pressure, as compared with the case where the content of hydrophobic insulating inorganic filler in the composition is less than 0.5 mass%. Furthermore, it is possible to prevent reduction in the cohesive force of the adhesive layer and further prevent reduction in the sealing strength and adhesion strength, as compared with the case where the content of filler in the composition exceeds 20 mass%. It is also possible to further prevent the adhesive layer from being more brittle.

The power storage device packaging material may be configured such that the barrier layer further includes an anticorrosion treatment layer on one or both surfaces of the metal layer.

In the packaging material, the adhesive layer has higher adhesion to the anticorrosion treatment layer, and it is possible to prevent the adhesive layer from flowing; thus, the packaging material can have better insulating properties when the packaging material is used as a packaging bag for a battery cell of a power storage device under heat and pressure.

The power storage device packaging material may be configured to further include a first adhesive layer between the substrate layer and the barrier layer and configured such that the adhesive layer is a second adhesive layer, and a thickness of the second adhesive layer is greater than a thickness of the first adhesive layer. In this case, the second adhesive layer containing a hydrophobic insulating inorganic filler prevents the second adhesive layer from having lower adhesion strength than the first adhesive layer. Furthermore, the hydrophobic insulating inorganic filler is less likely to be exposed on the surface of the second adhesive layer, and it is possible to easily prevent reduction in adhesion strength of the second adhesive layer to the sealant layer or the barrier layer.

The power storage device packaging material may be configured such that the power storage device is a solid-state battery.

Furthermore, the present disclosure provides a power storage device including: a battery cell that includes a positive electrode, an electrolyte, and a negative electrode in this order; and a packaging bag that houses the battery cell, wherein the packaging bag includes the power storage device packaging material.

The power storage device of the present disclosure has good insulating properties when the packaging material is used as a packaging bag under heat and pressure; thus, it is possible to prevent a short circuit between the positive electrode or the negative electrode of the battery cell and the metal layer of the packaging material even if the power storage device is heated while pressure is applied in a direction perpendicular to the interface between the battery cell and the packaging material.

The power storage device may be a solid-state battery.

### [Advantageous Effects of the Invention]

The present disclosure provides a power storage device packaging material having good insulating properties when the packaging material is used as a packaging bag in a power storage device under heat and pressure, and a power storage device.

### [Brief Description of the Drawings]

Fig. 1 is a cross-sectional view of a first embodiment of a power storage device packaging material of the present disclosure.
Fig. 2 is a cross-sectional view of a second embodiment of the power storage device packaging material of the present disclosure.
Fig. 3 is a perspective view of an embodiment of the power storage device of the present disclosure.
Fig. 4 is a cross-sectional view of a battery cell in Fig. 3.
Fig. 5 is a plan view of a folded cut piece from which a sample for sealing strength measurement used in examples and comparative examples is to be cut.

### [Description of the Embodiments]

Preferred embodiments of the present disclosure will be described in detail below with reference to the drawings as appropriate. In the drawings, the same or corresponding components are denoted by the same reference signs, and redundant description is omitted.

### [First embodiment of power storage device packaging material]

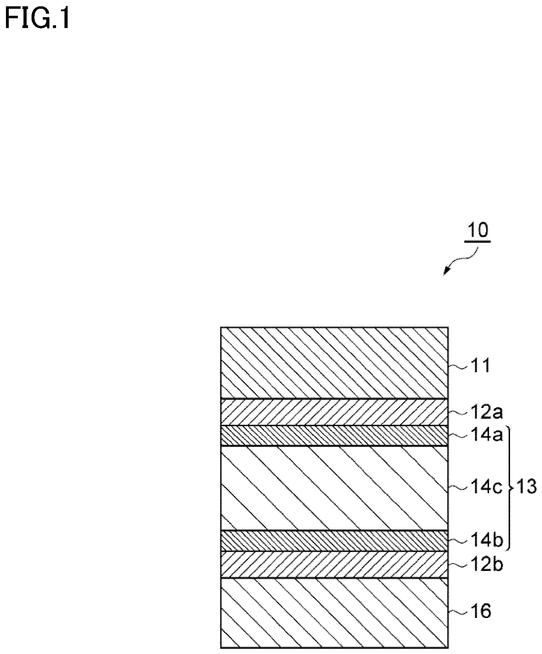

First, a first embodiment of a power storage device packaging material of the present disclosure will be described with reference to Fig. 1. Fig. 1 is a cross-sectional view of the first embodiment of the power storage device packaging material of the present disclosure.

A power storage device packaging material (hereinafter also simply referred to as a "packaging material") 10 shown in Fig. 1 is a packaging material used for a power storage device, and includes a substrate layer 11, a first adhesive layer 12a, a barrier layer 13, a second adhesive layer 12b as an adhesive layer, and a sealant layer 16 in this order.

The second adhesive layer 12b contains a hydrophobic insulating inorganic filler. The second adhesive layer 12b is composed of an adhesive as a composition containing a hydrophobic insulating inorganic filler.

The barrier layer 13 includes a first anticorrosion treatment layer 14a and a second anticorrosion treatment layer 14b on the respective surfaces of a metal layer 14c. The first anticorrosion treatment layer 14a is disposed between the substrate layer 11 and the metal layer 14c, and the second anticorrosion treatment layer 14b is disposed between the metal layer 14c and the second adhesive layer 12b.

In Fig. 1, the anticorrosion treatment layers 14a and 14b are provided on the respective surfaces of the metal layer 14c; however, only one of the anticorrosion treatment layers 14a and 14b may be provided on the metal layer 14c.

In the packaging material 10, the substrate layer 11 is the outermost layer, and the sealant layer 16 is the innermost layer. That is, the packaging material 10 is used so that the substrate layer 11 faces outside the power storage device and the sealant layer 16 faces inside the power storage device.

The packaging material 10 has good insulating properties when the packaging material 10 is used as a packaging bag in a power storage device under heat and pressure.

The layers constituting the packaging material 10 will be specifically described.

### <Substrate layer>

The substrate layer 11 allows the packaging material 10 to have heat resistance in a sealing process of the packaging bag during production of the power storage device, and prevents the possible occurrence of pinholes during forming processing and distribution of the packaging material 10. In a packaging material for a large power storage device in particular, the substrate layer 11 can also allow the packaging material to have scratch resistance, chemical resistance, insulating properties, and the like.

The substrate layer 11 is preferably composed of a resin having insulating properties. Examples of the resin include a polyester resin, a polyamide resin, a polyimide resin, a polyamideimide resin, a polyether ketone resin, a polyphenylene sulfide resin, a polyetherimide resin, a polysulfone resin, a fluororesin, a phenol resin, a melamine resin, a urethane resin, an allyl resin, a silicon resin, an epoxy resin, a furan resin, and an acetylcellulose resin.

Of the above resins, a polyester resin and a polyamide resin have good formability and thus are preferable for the substrate layer 11. Examples of the polyester resin include polyethylene terephthalate, polybutylene terephthalate, and polyethylene naphthalate. Examples of the polyamide resin include nylon 6, nylon 6,6, a copolymer of nylon 6 and nylon 6,6, nylon 6, nylon 9T, nylon 10, polymetaxylylene adipamide (MXD6), nylon 11, and nylon 12.

The substrate layer 11 may contain, for example, additives such as a flame retardant, a slip agent, an anti-blocking agent, an antioxidant, a photostabilizer, a dehydrating agent, a crystal nucleating agent, and a tackifier, if necessary.

The substrate layer 11 may be in the form of a stretched film or an unstretched film or in the form of a coating film. Furthermore, the substrate layer 11 may have a single-layer structure or a multilayer structure, and the substrate layer 11 having a multilayer structure may be composed of a combination of different resins. When the substrate layer 11 is a film, the substrate layer 11 may be composed of a laminate obtained by coextrusion of a plurality of layers or a laminate obtained by lamination of a plurality of layers via an adhesive. When the substrate layer 11 is a coating film, the substrate layer 11 may be a coating film obtained by performing coating with a coating solution the number of times required for lamination, or the substrate layer 11 may have a multilayer structure including a film and a coating film in combination.

When the resins described above are used in the form of a film, the substrate layer 11 is preferably a biaxially stretched film. When the substrate layer 11 is a biaxially stretched film, the biaxially stretched film may be obtained, for example, by sequential biaxial stretching, tubular biaxial stretching, simultaneous biaxial stretching, or the like. The biaxially stretched film is preferably obtained by tubular biaxial stretching, from the viewpoint of achieving better deep drawing formability.

The substrate layer 11 preferably has a thickness of 6 to 40 µm, and more preferably 10 to 30 µm. When the thickness of the substrate layer 11 is 6 µm or more, the packaging material 10 tends to have better pinhole resistance and insulating properties. When the thickness of the substrate layer 11 is 40 µm or less, the total thickness of the packaging material 10 is small.

In order to prevent deformation of the substrate layer 11 during sealing, the melting point of the substrate layer 11 is preferably higher than the melting point of the sealant layer 16, and more preferably higher by 30°C or more than the melting point of the sealant layer 16.

### <First adhesive layer>

The first adhesive layer 12a adheres the substrate layer 11 to the metal layer 14c. The first adhesive layer 12a is composed of a first adhesive layer forming composition (adhesive). The first adhesive layer forming composition may contain, for example, a base resin such as a polyester polyol, a polyether polyol, an acrylic polyol, or a carbonate polyol, and a bi- or higher-functional isocyanate compound (polyfunctional isocyanate compound). The various polyols can be used singly or in combination of two or more, according to the function and performance required for the packaging material 10. Other than the first adhesive layer forming composition described above, examples of the first adhesive layer forming composition for forming the first adhesive layer 12a include, but are not limited to, a first adhesive layer forming composition containing a base resin such as an epoxy resin and a curing agent.

The first adhesive layer forming composition may contain various additives such as a flame retardant, a slip agent, an anti-blocking agent, an antioxidant, a photostabilizer, a dehydrating agent, a crystal nucleating agent, and a tackifier, according to the performance required for the first adhesive layer 12a.

The thickness of the first adhesive layer 12a is not particularly limited, but is preferably, for example, 1 to 10 µm, and more preferably 2 to 7 µm, from the viewpoint of obtaining the desired adhesive strength, conformability, processability, and the like.

### <Barrier layer>

### (Metal layer)

The metal layer 14c has water vapor barrier properties to prevent moisture from entering the power storage device. The metal layer 14c may have ductility for deep drawing. As the metal layer 14c, for example, various metal foils such as of aluminum, stainless steel or copper, or metal vapor deposition films, films provided with such vapor deposition films, or the like, may be used. The film provided with a vapor deposition film may be, for example, an aluminum vapor deposition film. The metal layer 14c is preferably a metal foil, and more preferably an aluminum foil, from the viewpoint of mass (specific gravity), moisture resistance, processability, and cost.

The aluminum foil may be preferably an annealed soft aluminum foil in particular, from the viewpoint of obtaining the desired ductility during forming, and more preferably an aluminum foil containing iron, in order to obtain higher pinhole resistance and ductility during forming. The iron content in the aluminum foil is preferably 0.1 to 9.0 mass%, and more preferably 0.5 to 2.0 mass%, with respect to 100 mass% of aluminum foil. When the iron content is 0.1 mass% or more, the packaging material 10 can have higher pinhole resistance and ductility. When the iron content is 9.0 mass% or less, the packaging material 10 can have higher flexibility. The aluminum foil may be an untreated aluminum foil, but is preferably a degreased aluminum foil, from the viewpoint of obtaining corrosion resistance. When the aluminum foil is degreased, only one surface of the aluminum foil may be degreased, or both surfaces of the aluminum foil may be degreased.

The thickness of the metal layer 14c is not particularly limited, but is preferably 9 to 200 µm, and more preferably 15 to 100 µm, considering barrier properties, pinhole resistance, and processability.

### (First anticorrosion treatment layer and second anticorrosion treatment layer)

The first anticorrosion treatment layer 14a and the second anticorrosion treatment layer 14b are provided to prevent corrosion of the metal layer 14c. The first anticorrosion treatment layer 14a prevents corrosion of the metal layer 14c by corrosive gases contained in the air, and achieves higher adhesion between the metal layer 14c and the first adhesive layer 12a. The second anticorrosion treatment layer 14b prevents corrosion of the metal layer 14c by gas (e.g., hydrogen sulfide gas) generated in an electrolyte or a battery to obtain higher resistance to the gas generated in the electrolyte or the battery, and achieves higher adhesion between the metal layer 14c and the second adhesive layer 12b. The first anticorrosion treatment layer 14a and the second anticorrosion treatment layer 14b allow the packaging material 10 to maintain reliability over a longer period. The first anticorrosion treatment layer 14a and the second anticorrosion treatment layer 14b may have the same configuration or different configurations. The first anticorrosion treatment layer 14a and the second anticorrosion treatment layer 14b (hereinafter also simply referred to as "anticorrosion treatment layers 14a and 14b") are formed, for example, by applying, to the metal foil constituting the metal layer 14c, degreasing treatment, hydrothermal conversion treatment, anodic oxidation treatment, chemical conversion treatment, or a combination of these treatments.

Examples of the degreasing treatment include acid degreasing treatment and alkaline degreasing treatment. In the acid degreasing treatment, an inorganic acid such as sulfuric acid, nitric acid, hydrochloric acid, or hydrofluoric acid may be used singly or as a mixture. The acid degreasing treatment is preferably performed using an acid degreasing agent obtained by dissolving a fluorine-containing compound such as monosodium ammonium difluoride in the inorganic acid. In particular, when the metal layer 14c is composed of an aluminum foil, the treatment makes it possible not only to obtain an aluminum degreasing effect but also to form a fluoride of aluminum in a passive state. Thus, the treatment is effective in terms of obtaining corrosion resistance. The alkaline degreasing treatment may be performed using sodium hydroxide or the like.

Examples of the hydrothermal conversion treatment include boehmite treatment in which an aluminum foil is immersed in boiling water containing triethanolamine. Examples of the anodic oxidation treatment include alumite treatment.

The chemical conversion treatment may be an immersion-type chemical conversion treatment or a coating-type chemical conversion treatment. Examples of the immersion-type chemical conversion treatment include chromate treatment, ceria sol treatment, zirconium treatment, titanium treatment, vanadium treatment, molybdenum treatment, calcium phosphate treatment, strontium hydroxide treatment, cerium treatment, ruthenium treatment, and various chemical conversion treatments using mixed phases of these materials. Examples of the coating-type chemical conversion treatment include a treatment in which a coating agent having anticorrosion properties is applied onto the metal layer 14c.

Of these anticorrosion treatments, before any of the hydrothermal conversion treatment, the anodic oxidation treatment, and the chemical conversion treatment is performed to form at least part of the anticorrosion treatment layers, it is preferable to perform the aforementioned degreasing treatment in advance. When the metal layer 14c is composed of a degreased metal foil such as an annealed metal foil, no degreasing treatment is required to form the anticorrosion treatment layers 14a and 14b.

The coating agent used in the coating-type chemical conversion treatment preferably contains trivalent chromium. The coating agent may contain at least one polymer selected from the group consisting of a cationic polymer and an anionic polymer described later.

Of the treatments described above, in the hydrothermal conversion treatment and the anodic oxidation treatment in particular, the surface of an aluminum foil is dissolved with a treatment agent to form an aluminum compound (boehmite or alumite) having high corrosion resistance. Thus, a co-continuous structure extending from the metal layer 14c composed of an aluminum foil to the anticorrosion treatment layers 14a and 14b is obtained, and these treatments are therefore included in the definition of chemical conversion treatment. However, as described later, the anticorrosion treatment layers 14a and 14b can be formed only by a pure coating method that is not included in the definition of chemical conversion treatment. In such a coating method, for example, a sol of rare-earth element oxide such as cerium oxide with an average particle size of 100 nm or less may be used as a material that has an anticorrosion effect (inhibitor effect) for aluminum and is preferable in terms of environmental aspects. The use of such a rare-earth element oxide sol allows a metal foil such as an aluminum foil to have an anticorrosion effect even when a typical coating method is used.

Examples of the rare-earth element oxide sol include sols containing various solvents such as an aqueous solvent, an alcoholic solvent, a hydrocarbon solvent, a ketone solvent, an ester solvent, or an ether solvent. Of these, an aqueous sol (a sol containing an aqueous solvent) is preferable.

To stabilize the dispersion of the rare-earth element oxide sol, the rare-earth element oxide sol typically contains, as a dispersion stabilizer, an inorganic acid such as nitric acid, hydrochloric acid, or phosphoric acid, or a salt thereof, or an organic acid such as acetic acid, malic acid, ascorbic acid, or lactic acid. Of these dispersion stabilizers, phosphoric acid in particular is expected to achieve the following effects (1) to (4) in the packaging material 10.
(1) Stabilized dispersion of sol
(2) Higher adhesion to the metal layer 14c due to aluminum chelating ability of phosphoric acid
(3) Corrosion resistance obtained by capture of aluminum ions (passivation)
(4) Higher cohesive force of the anticorrosion treatment layers (oxide layers) 14a and 14b due to the ease of dehydration condensation of phosphoric acid occurring even at low temperature

The anticorrosion treatment layers 14a and 14b composed of the rare-earth element oxide sol are an aggregate of inorganic particles, and this may cause the layers to have a low cohesive force even after dry curing. Thus, in such a case, in order to compensate the cohesive force, the anticorrosion treatment layers 14a and 14b are preferably formed as composite layers using an anionic polymer or a cationic polymer.

The anticorrosion treatment layers 14a and 14b are not limited to the layers described above. For example, the anticorrosion treatment layers 14a and 14b may be formed using a treatment agent obtained by adding phosphoric acid and a chromium compound to a resin binder (aminophenol, etc.), as in a coating-type chromate treatment that is a known technique. The use of the treatment agent allows the anticorrosion treatment layers 14a and 14b to have both anticorrosion properties and adhesion. Alternatively, it is possible to allow the anticorrosion treatment layers 14a and 14b to have both anticorrosion properties and adhesion by using a coating agent prepared in advance by combining a rare-earth element oxide sol with a polycationic polymer or a polyanionic polymer, although the stability of the coating agent needs to be considered.

The mass per unit area of the anticorrosion treatment layers 14a and 14b is preferably 0.005 to 0.200 g/m², and more preferably 0.010 to 0.100 g/m², regardless of whether the anticorrosion treatment layers 14a and 14b have a multilayer structure or a single-layer structure. When the mass per unit area is 0.005 g/m² or more, the metal layer 14c is more likely to have anticorrosion properties. Even if the mass per unit area exceeds 0.200 g/m², there is little change in the anticorrosion properties. When a rare-earth element oxide sol is used and the coating is thick, thermal curing during drying may be insufficient, causing a lower cohesive force. The thickness of the anticorrosion treatment layers 14a and 14b can be converted from the specific gravity of the anticorrosion treatment layers 14a and 14b.

From the viewpoint that the adhesion between the sealant layer 16 and the barrier layer 13 is more likely to be maintained, for example, the anticorrosion treatment layers 14a and 14b may contain cerium oxide, 1 to 100 parts by mass of phosphoric acid or phosphate with respect to 100 parts by mass of the cerium oxide, and a cationic polymer, or may be formed by applying chemical conversion treatment to the metal layer 14c, or may be formed by applying chemical conversion treatment to the metal layer 14c and contain a cationic polymer.

### <Second adhesive layer>

The second adhesive layer 12b adheres the metal layer 14c to the sealant layer 16. The second adhesive layer 12b is composed of a composition (adhesive) containing a hydrophobic insulating inorganic filler. The composition may contain a resin.

### (Hydrophobic insulating inorganic filler)

A hydrophobic insulating inorganic filler is an insulating inorganic filler having hydrophobicity, and is obtained by surface treating an insulating inorganic filler with an organosilicon compound. When an insulating inorganic filler is surface treated with an organosilicon compound, the surface of the insulating inorganic filler is hydrophobized to cause the insulating inorganic filler to have hydrophobicity. An inorganic filler is used because an inorganic filler is less likely to be deformed than an organic filler when heat and pressure are applied for a long time. The insulating inorganic filler may be, for example, non-hydrophobic.

Examples of the non-hydrophobic insulating inorganic filler include silica and talc. Of these, silica is preferable from the viewpoint of insulating properties and particle size control.

Examples of the organosilicon compound include alkoxysilanes. The alkoxysilane may have an alkyl group such as a methyl group. In this case, the non-hydrophobic insulating inorganic filler easily reacts with the alkoxysilane.

The average particle size of the hydrophobic insulating inorganic filler is not particularly limited, but is preferably 1 µm or more.

In this case, the packaging material 10 can have better insulating properties when the packaging material 10 is used as a packaging bag for a battery cell of a power storage device under heat and pressure, as compared with the case where the average particle size of the hydrophobic insulating inorganic filler is less than 1 µm.

The average particle size of the hydrophobic insulating inorganic filler is more preferably 3 µm or more, and still more preferably 5 µm or more.

The average particle size of the hydrophobic insulating inorganic filler is preferably 20 µm or less. In this case, the hydrophobic insulating inorganic filler can maintain a good dispersion state in the composition, and reduction in the cohesive force of the second adhesive layer 1b is suppressed; thus, reduction in the adhesion strength of the second adhesive layer 12b to the barrier layer 13 and the sealant layer 16 is suppressed, and reduction in sealing strength of the sealant layer 16 is also suppressed.

The average particle size of the hydrophobic insulating inorganic filler is more preferably 15 µm or less, and particularly preferably 10 µm or less.

The average particle size of the hydrophobic insulating inorganic filler is obtained by capturing an enlarged image of a plurality of hydrophobic insulating inorganic filler particles using an electron microscope, then obtaining the sizes of the hydrophobic insulating inorganic filler particles by image analysis, and calculating the average of the sizes of the hydrophobic insulating inorganic filler particles. Specifically, the size of each hydrophobic insulating inorganic filler particle is obtained by calculating, as the area of a circle, an area S of the hydrophobic insulating inorganic filler particle by image analysis and doubling a radius r (r = (S/π) 1/2) obtained from the area S of a circle.

In the second adhesive layer forming composition, the content of hydrophobic insulating inorganic filler in the total solid content, that is, the content of hydrophobic insulating inorganic filler in the second adhesive layer 12b, is not particularly limited, but is preferably 0.5 mass% or more.

In this case, the insulating layer including the second adhesive layer 12b is more likely to maintain a uniform thickness when the packaging material 10 is used as a packaging bag for a battery cell of a power storage device under heat and pressure, as compared with the case where the content of hydrophobic insulating inorganic filler in the total solid content is less than 0.5 mass%.

The content of hydrophobic insulating inorganic filler in the total solid content is more preferably 1 mass% or more, still more preferably 2 mass% or more, and particularly preferably 4 mass% or more.

The content of hydrophobic insulating inorganic filler in the total solid content is preferably 20 mass% or less.

In this case, it is possible to prevent reduction in the cohesive force of the second adhesive layer 12b and further prevent reduction in sealing strength and adhesion strength, as compared with the case where the content of hydrophobic insulating inorganic filler in the total solid content exceeds 20 mass%. It is also possible to further prevent the second adhesive layer 12b from being more brittle.

The content of hydrophobic insulating inorganic filler in the total solid content is more preferably 15 mass% or less, still more preferably 10 mass% or less, and particularly preferably 8 mass% or less.

### (Resin)

The resin is not particularly limited, but preferably contains a modified polyolefin resin. A modified polyolefin resin achieves better dispersion of the hydrophobic insulating inorganic filler in the resin. Furthermore, the resin containing a modified polyolefin resin enables the second adhesive layer 12b to have high adhesion to the barrier layer 13 and the sealant layer 16, allowing the packaging material 10 to have higher lamination strength.

Examples of the modified polyolefin resin include a hydroxyl group-modified polyolefin resin, a glycidyl-modified polyolefin resin, and an acid-modified polyolefin resin. Of these, an acid-modified polyolefin resin is preferable from the viewpoint of adhesion to the barrier layer 13 and the sealant layer 16.

The acid-modified polyolefin resin may be a polyolefin resin graft-modified with an unsaturated carboxylic acid derivative derived from unsaturated carboxylic acid, unsaturated sulfonic acid, an acid anhydride of unsaturated carboxylic acid, an ester of unsaturated carboxylic acid, or the like.

Examples of the unsaturated carboxylic acid include acrylic acid, methacrylic acid, maleic acid, fumaric acid, itaconic acid, citraconic acid, tetrahydrophthalic acid, and bicyclo[2,2,1]hept-2-ene-5,6-dicarboxylic acid.

Examples of the acid anhydride of unsaturated carboxylic acid include maleic anhydride, itaconic anhydride, citraconic anhydride, tetrahydrophthalic anhydride, and bicyclo[2,2,1]hept-2-ene-5,6-dicarboxylic acid anhydride.

Examples of the ester of unsaturated carboxylic acid include methyl acrylate, methyl methacrylate, ethyl methacrylate, butyl methacrylate, dimethyl maleate, monomethyl maleate, diethyl fumarate, dimethyl itaconate, diethyl citraconate, dimethyl tetrahydrophthalic anhydride, and bicyclo[2,2,1]hept-2-ene-5,6-dimethyl dicarboxylate.

Examples of the polyolefin resin include polyethylene resins such as low-density polyethylene (LDPE or LLDPE), medium-density polyethylene (MDPE), high-density polyethylene (HDPE), and an ethylene-α-olefin copolymer; and polypropylene resins such as homopolypropylene, block polypropylene, random polypropylene, and a propylene-α-olefin copolymer. Of these, a polypropylene resin is preferable from the viewpoint of heat resistance.

The acid-modified polyolefin resin is preferably a polyolefin resin modified with maleic anhydride, from the viewpoint of obtaining high adhesion between the barrier layer 13 and the second adhesive layer 12b.

Examples of suitable modified polyolefin resins include "Admer" manufactured by Mitsui Chemicals, Inc., "Modic" manufactured by Mitsubishi Chemical Corporation, "Toyo-Tac" manufactured by Toyobo Co., Ltd., and "Sanstack" manufactured by Sanyo Chemical Industries, Ltd. Such a modified polyolefin resin has high reactivity with various metals and polymers having various functional groups, and the reactivity allows the second adhesive layer 12b to have adhesion.

When a sealant layer forming resin composition for forming the sealant layer 16 contains a polyolefin resin as a resin, the second adhesive layer forming composition preferably contains a polyolefin resin similar to the polyolefin resin in the sealant layer forming resin composition. For example, when the sealant layer forming resin composition contains a polypropylene resin as a resin, the acid-modified polyolefin resin in the second adhesive layer forming composition is preferably an acid-modified polypropylene resin. In this case, the second adhesive layer 12b can have high adhesion to the sealant layer 16 and allow the packaging material 10 to have higher heat resistance.

When the resin contains a modified polyolefin resin, the second adhesive layer forming composition preferably further contains a polyfunctional isocyanate compound as a curing agent. In this case, the second adhesive layer 12b further containing a polyfunctional isocyanate compound can have high adhesion and heat resistance, achieving high sealing strength and heat resistance and good barrier properties.

Examples of the polyfunctional isocyanate compound include diisocyanates such as tolylene diisocyanate, xylylene diisocyanate, and hydrogenated products thereof, hexamethylene diisocyanate, 4,4'-diphenylmethane diisocyanate, and hydrogenated products thereof, and isophorone diisocyanate; polyisocyanates such as an adduct obtained by reacting such an isocyanate with polyhydric alcohol such as trimethylolpropane, a biuret obtained by reacting such an isocyanate with water, and an isocyanurate (isocyanurate-type polyfunctional isocyanate compound) that is a trimer; and blocked polyisocyanates obtained by blocking such a polyisocyanate with an alcohol, a lactam, an oxime, or the like.

Of these, an isocyanurate (isocyanurate-type polyfunctional isocyanate compound) is preferably contained in the polyfunctional isocyanate compound. The polyfunctional isocyanate compound containing an isocyanurate enables the second adhesive layer 12b to have high adhesion and heat resistance, allowing the packaging material 10 to have high sealing strength and heat resistance.

The amount of polyfunctional isocyanate compound may be, for example, 3 parts by mass or less, 2 parts by mass or less, or 1 part by mass or less, with respect to 100 parts by mass of modified polyolefin resin (solid content). The amount of polyfunctional isocyanate compound may be more than 0 parts by mass, or 0.5 parts by mass or more, with respect to 100 parts by mass of modified polyolefin resin (solid content).

When the resin contains an acid-modified polyolefin resin as a modified polyolefin resin, the second adhesive layer forming composition preferably further contains a carbodiimide compound as a curing agent. The second adhesive layer forming composition further containing a carbodiimide compound allows the packaging material 10 to have higher heat resistance, as compared with the case where the second adhesive layer forming composition contains no carbodiimide compound. This is because a reaction between the carbodiimide compound and the acid-modified polyolefin resin achieves a higher crosslinking density.

Examples of the carbodiimide compound include N,N'-di-o-tolylcarbodiimide, N,N'-diphenylcarbodiimide, N,N'-di-2,6-dimethylphenylcarbodiimide, N,N'-bis(2,6-diisopropylphenyl)carbodiimide, N,N'-dioctyldecylcarbodiimide, N-tolyl-N'-cyclohexylcarbodiimide, N,N'-di-2,2-di-t-butylphenylcarbodiimide, N-triyl-N'-phenylcarbodiimide, N,N'-di-p-nitrophenylcarbodiimide, N,N'-di-p-aminophenylcarbodiimide, N,N'-di-p-hydroxyphenylcarbodiimide, N,N'-di-cyclohexylcarbodiimide, and N,N'-di-p-tolylcarbodiimide. These can be used singly or in combination of two or more.

The amount of carbodiimide compound may be, for example, 3 parts by mass or less with respect to 100 parts by mass of modified polyolefin resin (solid content).

The second adhesive layer forming composition may further contain various additives such as a flame retardant, a slip agent, an anti-blocking agent, an antioxidant, a photostabilizer, a tackifier, a dehydrating agent, and a crystal nucleating agent, if necessary.

The second adhesive layer forming composition for forming the second adhesive layer 12b may be, for example, a polyurethane adhesive containing polyester polyol composed of hydrogenated dimer fatty acid and diol, polyisocyanate, and a hydrophobic insulating inorganic filler. The second adhesive layer forming composition may be a polyurethane resin obtained by allowing a bi- or higher-functional isocyanate compound to act on a base resin such as a polyester polyol, a polyether polyol, an acrylic polyol, or a carbonate polyol, or an epoxy resin obtained by allowing an amine compound or the like to act on a base resin having an epoxy group, which are preferable from the viewpoint of heat resistance.

The second adhesive layer 12b may have a single-layer structure or a multilayer structure. When the second adhesive layer 12b has a multilayer structure, all the layers of the multilayer structure may contain a hydrophobic insulating inorganic filler, or only some of the layers may contain a hydrophobic insulating inorganic filler.

The thickness of the second adhesive layer 12b is not particularly limited, but is preferably 0.2 to 30 µm. In this case, sufficient adhesion is obtained, as compared with the case where the thickness of the second adhesive layer 12b is less than 0.2 µm. Furthermore, the power storage device can have a higher volumetric energy density, as compared with the case where the thickness of the second adhesive layer 12b exceeds 30 µm.

The thickness of the second adhesive layer 12b is more preferably 0.2 to 25 µm, still more preferably 0.2 to 20 µm, and particularly preferably 0.2 to 10 µm.

The thickness of the second adhesive layer 12b may be less than or equal to the thickness of the first adhesive layer 12a, or may be greater than the thickness of the first adhesive layer 12a, but is preferably greater than the thickness of the first adhesive layer 12a. In this case, the second adhesive layer 12b containing a hydrophobic insulating inorganic filler prevents the second adhesive layer 12b from having lower adhesion strength than the first adhesive layer 12a. Furthermore, the hydrophobic insulating inorganic filler is less likely to be exposed on the surface of the second adhesive layer 12b, and it is possible to easily prevent reduction in adhesion strength of the second adhesive layer 12b to the sealant layer 16 or the barrier layer 13. In this case, a ratio R of the thickness of the second adhesive layer 12b to the thickness of the first adhesive layer 12a may be greater than 1, but is preferably 2 or more, and more preferably 3 or more. The ratio R may be 10 or less, preferably 8 or less, more preferably 6 or less, and even more preferably 5 or less.

### <Sealant layer>

The sealant layer 16 allows the packaging material 10 to have heat sealability, and is heat sealed on the inner side during assembly of the power storage device. The sealant layer 16 is composed of a sealant layer forming resin composition containing a resin.

### (Sealant layer forming resin composition)

### (Resin)

The resin contained in the sealant layer forming resin composition may be a polyolefin resin or a polyester resin. Such resins (hereinafter also referred to as "base resins") constituting the sealant layer 16 may be used singly or in combination of two or more.

Examples of the polyolefin resin include polyethylene resins such as low-density polyethylene (LDPE or LLDPE), medium-density polyethylene (MDPE), high-density polyethylene (HDPE), and an ethylene-α-olefin copolymer; polypropylene resins such as homopolypropylene, block polypropylene, and a propylene-α-olefin copolymer; and polybutene.

The polyolefin resin is preferably a polypropylene resin, from the viewpoint of heat resistance and flexibility, and particularly preferably homopolypropylene or block polypropylene, which has a high melting point.

Examples of the polyester resin include a polyethylene terephthalate (PET) resin, a polybutylene terephthalate (PBT) resin, a polyethylene naphthalate (PEN) resin, a polybutylene naphthalate (PBN) resin, and copolymers thereof.

### (Hydrophobic insulating inorganic filler)

The sealant layer forming resin composition may or may not contain a hydrophobic insulating inorganic filler, but preferably contains a hydrophobic insulating inorganic filler.

The average particle size of the hydrophobic insulating inorganic filler is not particularly limited, but is preferably 1 µm or more.

In this case, the packaging material 10 can have better insulating properties when the packaging material 10 is used as a packaging bag for a battery cell of a power storage device under heat and pressure, as compared with the case where the average particle size of the hydrophobic insulating inorganic filler is less than 1 µm.

The average particle size of the hydrophobic insulating inorganic filler is more preferably 3 µm or more, and still more preferably 5 µm or more.

The average particle size of the hydrophobic insulating inorganic filler is preferably 20 µm or less. In this case, the hydrophobic insulating inorganic filler can maintain a good dispersion state in the composition, and reduction in the cohesive force of the sealant layer 16 is suppressed; thus, reduction in the adhesion strength of the sealant layer 16 to the second adhesive layer 12b is suppressed, and reduction in sealing strength of the sealant layer is also suppressed.

The average particle size of the hydrophobic insulating inorganic filler is more preferably 15 µm or less, and particularly preferably 10 µm or less.

The content of hydrophobic insulating inorganic filler in the sealant layer forming resin composition is not particularly limited, but is preferably 0.5 mass% or more.

In this case, the insulating layer including the sealant layer 16 is more likely to maintain a uniform thickness when the packaging material 10 is used as a packaging bag for a battery cell of a power storage device under heat and pressure, as compared with the case where the content of hydrophobic insulating inorganic filler in the sealant layer forming resin composition is less than 0.5 mass%.

The content of hydrophobic insulating inorganic filler in the sealant layer forming resin composition is more preferably 1 mass% or more, still more preferably 2 mass% or more, and particularly preferably 4 mass% or more.

The content of hydrophobic insulating inorganic filler in the sealant layer forming resin composition is preferably 20 mass% or less.

In this case, it is possible to prevent reduction in the cohesive force of the sealant layer 16 and further prevent reduction in the sealing strength and adhesion strength, as compared with the case where the content of hydrophobic insulating inorganic filler in the sealant layer forming resin composition exceeds 20 mass%. It is also possible to further prevent the sealant layer 16 from being more brittle.

The content of hydrophobic insulating inorganic filler in the sealant layer forming resin composition is more preferably 15 mass% or less, still more preferably 10 mass% or less, and particularly preferably 8 mass% or less.

The sealant layer 16 may be a single-layer film or a multilayer film.

When the sealant layer 16 is a multilayer film, all the layers of the multilayer film may contain a hydrophobic insulating inorganic filler, or only some of the layers may contain a hydrophobic insulating inorganic filler. For example, when the sealant layer 16 is a two-layer film, all the layers of the two-layer film may contain a hydrophobic insulating inorganic filler, or only the layer of the two-layer film on the second adhesive layer 12b side may contain a hydrophobic insulating inorganic filler, or only the layer of the two-layer film on the side facing away from the second adhesive layer 12b may contain a hydrophobic insulating inorganic filler.

The sealant layer 16 may contain for example, additives such as a slip agent, an anti-blocking agent, an antioxidant, a photostabilizer, a flame retardant, a dehydrating agent, a tackifier, and a crystal nucleating agent.

The amount of such additives is preferably 5 parts by mass or less, when the total mass of the sealant layer 16 is 100 parts by mass.

The MFR of the sealant layer 16 is not particularly limited, but is preferably 20 g/10 min or less.

In the case where the MFR of the sealant layer 16 is 20 g/10 min or less so that the sealant layer 16 is less likely to flow under heat and pressure, when the packaging material 10 is used as a packaging bag under heat and pressure, the sealant layer 16 is less likely to be compressed, ensuring a sufficient thickness of the insulating layer including the sealant layer 16 and achieving better insulating properties.

The MFR of the sealant layer 16 is preferably 18 g/10 min or less, and more preferably 15 g/10 min or less.

The MFR of the sealant layer 16 may be 0.1 g/10 min or more, preferably 0.3 g/10 min or more, more preferably 1 g/10 min or more, even more preferably 2 g/10 min or more, still even more preferably 4 g/10 min or more, still even more preferably 6 g/10 min or more, still even more preferably 8 g/10 min or more, and still even more preferably 10 g/10 min or more.

The MFR of the sealant layer 16 is measured in accordance with JIS K 7210 by a melt flow rate measurement device (manufactured by Toyo Seiki Seisaku-sho, Ltd., measurement temperature: 230°C).

The melting point of the sealant layer 16 is not particularly limited, but is preferably 160°C or higher.

When the melting point of the sealant layer 16 is 160°C or higher, it is possible to prevent the sealant layer 16 from flowing under heat and pressure as much as possible. This makes it possible to more sufficiently prevent compression of the insulating layer including the second adhesive layer 12b. Therefore, the packaging material 10 can have better insulating properties when the packaging material 10 is used as a packaging bag for a battery cell of a power storage device under heat and pressure.

In differential scanning calorimetry (DSC) measurement for the sealant layer 16, when a single peak corresponding to the melting point of the sealant layer 16 appears, the melting point refers to the temperature at the peak, and when a plurality of peaks corresponding to the melting point of the sealant layer 16 appear, the melting point refers to the temperature at the peak of one (main peak) of the plurality of peaks in which the intensity at the peak is maximum.

The melting point of the sealant layer 16 is more preferably 161°C or higher, and particularly preferably 162°C or higher.

The melting point of the sealant layer 16 is more preferably 270°C or lower, and particularly preferably 260°C or lower.

The thickness of the sealant layer 16 is not particularly limited, but is preferably in the range of 20 to 150 µm, more preferably in the range of 30 to 150 µm, and still more preferably in the range of 40 to 100 µm.

When the thickness of the sealant layer 16 is 20 µm or more, the packaging material 10 has higher sealing strength. When the thickness of the sealant layer 16 is 150 µm or less, the power storage device can have a higher volumetric energy density.

### <Packaging material>

In the packaging material 10, the breakdown voltage after heat and pressure are applied for 24 hours under conditions of 150°C and 3 MPa is preferably 100 V or more, more preferably 0.5 kV or more, and particularly preferably 1 kV or more.

In this case, even under severe heat and pressure conditions, the packaging material 10 can have better insulating properties when the packaging material 10 is used as a packaging bag for a battery cell of a power storage device under heat and pressure.

The breakdown voltage after heat and pressure are applied for 24 hours under conditions of 150°C and 3 MPa may be 5 kV or less.

### [Second embodiment of power storage device packaging material]

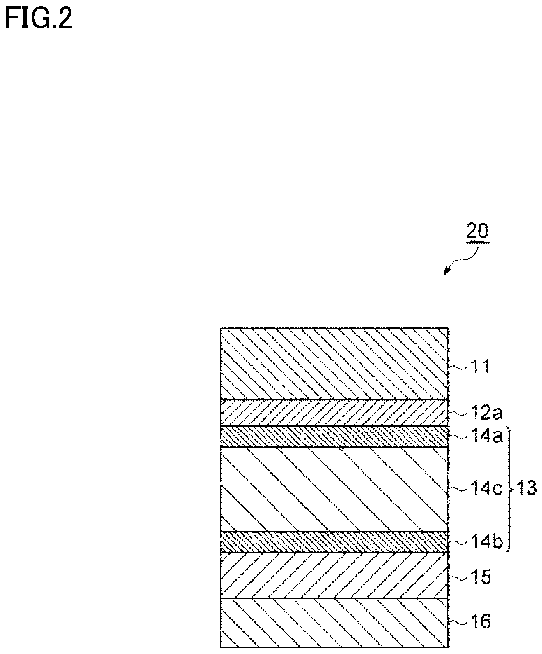

Next, a second embodiment of the power storage device packaging material of the present disclosure will be described with reference to Fig. 2. Fig. 2 is a cross-sectional view of the second embodiment of the power storage device packaging material of the present disclosure.

As shown in Fig. 2, a packaging material 20 of the present embodiment is different from the packaging material 10 of the first embodiment including the second adhesive layer 12b composed of an adhesive in that the packaging material 20 includes, as an adhesive layer, an adhesive resin layer 15 that is provided between the barrier layer 13 and the sealant layer 16 and is composed of an adhesive resin layer forming resin composition containing a resin and a hydrophobic insulating inorganic filler.

The packaging material 20 shown in Fig. 2 may further include the second adhesive layer 12b between the barrier layer 13 and the adhesive resin layer 15.

The adhesive resin layer 15 may be a single-layer film or a multilayer film. When the adhesive resin layer 15 is a multilayer film, all the layers of the multilayer film may contain a hydrophobic insulating inorganic filler, or only some of the layers may contain a hydrophobic insulating inorganic filler.

The thickness of the adhesive resin layer 15 is not particularly limited, but is preferably 5 to 30 µm. When the thickness of the adhesive resin layer 15 is 5 µm or more, sufficient adhesion is obtained. When the thickness of the adhesive resin layer 15 is 30 µm or less, the total thickness of the packaging material 10 is small, preventing a battery formed using the packaging material 10 from having a lower volumetric energy density.

The thickness of the adhesive resin layer 15 may be less than or equal to the thickness of the sealant layer 16, from the viewpoint of stress relaxation and moisture transmission.

The thickness of the adhesive resin layer 15 may be less than or equal to the thickness of the first adhesive layer 12a, or may be greater than the thickness of the first adhesive layer 12a, but is preferably greater than the thickness of the first adhesive layer 12a. In this case, the adhesive resin layer 15 containing a hydrophobic insulating inorganic filler prevents the adhesive resin layer 15 from having lower adhesion strength than the first adhesive layer 12a. Furthermore, the hydrophobic insulating inorganic filler is less likely to be exposed on the surface of the adhesive resin layer 15, and it is possible to easily prevent reduction in adhesion strength of the adhesive resin layer 15 to the sealant layer 16 or the barrier layer 13. In this case, a ratio R of the thickness of the adhesive resin layer 15 to the thickness of the first adhesive layer 12a may be greater than 1, but is preferably 2 or more, and more preferably 3 or more. The ratio R may be 10 or less, preferably 8 or less, more preferably 6 or less, and even more preferably 5 or less.

### [Method of producing packaging material]

Next, an example of a method of producing the packaging material 10 shown in Fig. 1 will be described. The method of producing the packaging material 10 is not limited to the following method.

The method of producing the packaging material 10 includes a step of laminating the anticorrosion treatment layers 14a and 14b on the respective surfaces of the metal layer 14c to form the barrier layer 13, a step of bonding the substrate layer 11 to the barrier layer 13 using the first adhesive layer 12a to obtain a first laminate, a step of further laminating the sealant layer 16 on the barrier layer 13 of the first laminate via the second adhesive layer 12b to prepare a second laminate, and if necessary, a step of aging the obtained second laminate.

### (Step of laminating anticorrosion treatment layers on metal layer)

In this step, the anticorrosion treatment layers 14a and 14b are formed on the respective surfaces of the metal layer 14c to form the barrier layer 13. As described above, the anticorrosion treatment layers 14a and 14b may be formed on the respective surfaces of the metal layer 14c by applying degreasing treatment, hydrothermal conversion treatment, anodic oxidation treatment, or chemical conversion treatment to the metal layer 14c, or applying a coating agent having anticorrosion properties to the metal layer 14c.

When the anticorrosion treatment layers 14a and 14b have a multilayer structure, the anticorrosion treatment layers 14a and 14b can be formed, for example, by applying, to the metal layer 14c, a coating liquid (coating agent) for forming an anticorrosion treatment layer on the lower side (the metal layer 14c side), and baking the coating agent to form a first layer, and then applying, to the first layer, a coating liquid (coating agent) for forming an anticorrosion treatment layer on the upper side, and baking the coating agent to form a second layer, and if necessary, repeating the operation of forming a first layer and a second layer.

The degreasing treatment can be performed by spraying or immersion. The hydrothermal conversion treatment and the anodic oxidation treatment can be performed by immersion. The chemical conversion treatment can be performed by a method appropriately selected from immersion, spraying, coating, and the like, according to the type of chemical conversion treatment.

The coating agent having anticorrosion properties can be applied using a coating method such as gravure coating, reverse coating, roll coating, or bar coating.

As described above, various treatments may be applied to one or both surfaces of the metal foil constituting the metal layer 14c. When treatment is applied to one surface of the metal foil, the treatment is preferably applied to the surface of the metal foil on the side on which the sealant layer 16 is to be laminated. The treatment may also be applied to the surface of the substrate layer 11, if necessary.

The amounts of coating agents for forming the first and second layers may be 0.005 to 0.200 g/m², and preferably 0.010 to 0.100 g/m².

When dry curing is required, drying may be performed at a base material temperature in the range of 60 to 300°C, according to the drying conditions for the anticorrosion treatment layers 14a and 14b used. The base material temperature refers to the temperature of the barrier layer 13 (e.g., metal foil).

### (Step of bonding substrate layer to barrier layer)

In this step, the substrate layer 11 is bonded to the barrier layer 13 via the first adhesive layer 12a to obtain a first laminate. The bonding may be performed using a method such as dry lamination, non-solvent lamination, or wet lamination to bond the layers (the barrier layer 13 and the substrate layer 11) with the first adhesive layer forming composition for forming the first adhesive layer 12a described above. The first adhesive layer 12a may be provided so that the dry coating weight of the first adhesive layer 12a is in the range of 1 to 10 g/m², and preferably in the range of 2 to 7 g/m².

### (Step of laminating second adhesive layer and sealant layer)

In this step, the sealant layer 16 is bonded via the second adhesive layer 12b to the surface of the first laminate on the second anticorrosion treatment layer 14b side to obtain a second laminate. The bonding may be performed by a method such as wet lamination or dry lamination.

For example, when the sealant layer 16 is bonded by dry lamination, the second adhesive layer forming composition for forming the second adhesive layer 12b is applied onto the second anticorrosion treatment layer 14b, and dried by evaporating the solvent at a predetermined temperature, followed by lamination of the sealant layer 16. The second adhesive layer forming composition may be applied using a coating method such as gravure coating, reverse coating, roll coating, or bar coating. The preferred dry coating weight of the second adhesive layer forming composition may be appropriately set according to the thickness of the second adhesive layer 12b.

The second adhesive layer forming composition can be obtained by dissolving or dispersing a resin, a hydrophobic insulating inorganic filler, and the like in a solvent. The second adhesive layer forming composition is preferably obtained by first dispersing a hydrophobic insulating inorganic filler in a solvent, and then adding a resin and a curing agent.

The second adhesive layer forming composition preferably further contains a dispersant. In this case, the dispersant enables the hydrophobic insulating inorganic filler to have higher dispersibility, and more easily prevents deterioration in function (e.g., adhesion strength or the like) of the second adhesive layer 12b.

The dispersant may be, for example, a surfactant such as metal soap (zinc stearate or the like). When the resin contains a modified polyolefin resin, the modified polyolefin resin can serve as a dispersant. The hydrophobic insulating inorganic filler is preferably dispersed using a dispersion device such as a bead mill, from the viewpoint of obtaining higher dispersibility of the hydrophobic insulating inorganic filler.

In the second adhesive layer forming composition, the average particle size of the hydrophobic insulating inorganic filler is not particularly limited, but is preferably 20 µm or less. When the average particle size of the hydrophobic insulating inorganic filler is 20 µm or less, it is possible to maintain a good dispersion state of the hydrophobic insulating inorganic filler, and prevent the second adhesive layer 12b as a coating film from having a lower cohesive force after formation. Furthermore, the hydrophobic insulating inorganic filler is less likely to fall from the second adhesive layer 12b. Furthermore, a protrusion from the surface of the second adhesive layer 12b does not have an excessively large height, and air bubbles are less likely to enter a portion between the sealant layer 16 and the second adhesive layer 12b during bonding of the sealant layer 16.

The average particle size of the hydrophobic insulating inorganic filler is more preferably 15 µm or less, and particularly preferably 10 µm or less. The average particle size of the hydrophobic insulating inorganic filler is preferably 1 µm or more. In this case, the particles are less likely to aggregate, and formation of an aggregate is less likely to occur during dispersion, leading to a more stable average particle size, as compared with the case where the average particle size of the hydrophobic insulating inorganic filler is less than 1 µm.

In the second adhesive layer forming composition, the content of hydrophobic insulating inorganic filler in the total solid content is preferably 20 mass% or less.

In this case, the second adhesive layer forming composition does not have excessively high viscosity (thixotropic properties), and is in a state more suitable for application, as compared with the case where the content of hydrophobic insulating inorganic filler in the total solid content exceeds 20 mass% in the second adhesive layer forming composition.

The sealant layer 16 can be formed, for example, by a melt extrusion molding machine with a T-die using the sealant layer forming resin composition for forming the sealant layer 16. The processing speed of the melt extrusion molding machine may be 80 m/min or more, from the viewpoint of productivity.

The sealant layer 16 containing a hydrophobic insulating inorganic filler may be formed using a sealant layer forming resin composition obtained by mixing a resin with a hydrophobic insulating inorganic filler in advance to prepare a masterbatch and mixing the masterbatch with a base resin during extrusion lamination or the like.

At that time, the base resin may be, for example, a resin having properties such as an MFR equivalent to those of the resin contained in the masterbatch.

The resin mixed with the hydrophobic insulating inorganic filler to prepare a masterbatch may be a modified polyolefin resin. The modified polyolefin resin is particularly preferably an acid-modified polyolefin resin, from the viewpoint of obtaining higher dispersibility for the base resin.

Furthermore, the concentration of the masterbatch in the sealant layer forming resin composition may be, for example, 5 to 50 mass%. When the concentration of the masterbatch in the sealant layer forming resin composition is 5 mass% or more, the masterbatch is sufficiently dispersed in the sealant layer 16. When the concentration of the masterbatch in the sealant layer forming resin composition is 50 mass% or less, the masterbatch is sufficiently dispersed by mixing during extrusion, and defects such as film breakage are less likely to occur.

When the sealant layer 16 is formed, the sealant layer forming resin composition preferably further contains a dispersant. In this case, the dispersant enables the hydrophobic insulating inorganic filler to have higher dispersibility, and more easily prevents deterioration in function (e.g., adhesion strength, sealing strength, or the like) of the sealant layer 16.

The dispersant may be, for example, a surfactant such as metal soap (zinc stearate or the like). When the resin contains a modified polyolefin resin, the modified polyolefin resin can serve as a dispersant.

In the sealant layer forming resin composition, the average particle size of the hydrophobic insulating inorganic filler is not particularly limited, but is preferably 20 µm or less. When the average particle size of the hydrophobic insulating inorganic filler is 20 µm or less, it is possible to maintain a good dispersion state of the hydrophobic insulating inorganic filler.

The average particle size of the hydrophobic insulating inorganic filler is more preferably 15 µm or less, and particularly preferably 10 µm or less. The average particle size of the hydrophobic insulating inorganic filler is preferably 1 µm or more. In this case, particle aggregation is suppressed and formation of an aggregate is less likely to occur during dispersion, leading to a stable average particle size, as compared with the case where the average particle size of the hydrophobic insulating inorganic filler is less than 1 µm.

### (Aging step)

In this step, the second laminate is aged (cured). Aging of the second laminate can promote adhesion between the metal layer 14c, the second anticorrosion treatment layer 14b, the second adhesive layer 12b, and the sealant layer 16. The second laminate may be aged at a temperature in the range of room temperature to 100°C. The aging time is, for example, 1 to 10 days.

In this manner, the packaging material 10 shown in Fig. 1 can be produced.

Next, an example of a method of producing the packaging material 20 shown in Fig. 2 will be described. The method of producing the packaging material 20 is not limited to the following method.

The method of producing the packaging material 20 includes a step of forming the anticorrosion treatment layers 14a and 14b on the respective surfaces of the metal layer 14c to form the barrier layer 13, a step of bonding the substrate layer 11 to the barrier layer 13 using the first adhesive layer 12a to obtain a first laminate, a step of further laminating the adhesive resin layer 15 and the sealant layer 16 on the barrier layer 13 of the first laminate to obtain a second laminate, and if necessary, a step of heat treating the obtained second laminate.

The steps up to the step of bonding the substrate layer 11 to the barrier layer 13 to obtain a first laminate can be performed in the same manner as in the method of producing the packaging material 10 described above.

### (Step of laminating adhesive resin layer and sealant layer)

In this step, the adhesive resin layer 15 and the sealant layer 16 are formed on the second anticorrosion treatment layer 14b of the first laminate formed in the earlier step to obtain a second laminate. The method of obtaining a second laminate may be sandwich lamination of the adhesive resin layer 15 together with the sealant layer 16 using an extrusion laminator, or thermal lamination such as coextrusion in which the adhesive resin layer 15 and the sealant layer 16 are extruded. The adhesive resin layer 15 and the sealant layer 16 are formed, for example, using the adhesive resin layer forming resin composition and the sealant layer forming resin composition described above.

The adhesive resin layer 15 may be formed using an adhesive resin layer forming resin composition obtained by mixing a resin with a hydrophobic insulating inorganic filler in advance to prepare a masterbatch and mixing the masterbatch with a base resin.

At that time, the base resin may be, for example, a resin having properties such as an MFR equivalent to those of the resin contained in the masterbatch.

The resin mixed with the hydrophobic insulating inorganic filler to prepare a masterbatch may be a modified polyolefin resin. The modified polyolefin resin is particularly preferably an acid-modified polyolefin resin, from the viewpoint of ease of mixing with the base resin and higher adhesion between the barrier layer 13 and the adhesive resin layer 15.

Furthermore, the concentration of the masterbatch in the adhesive resin layer forming resin composition may be, for example, 5 to 50 mass%. When the concentration of the masterbatch in the adhesive resin layer forming resin composition is 5 mass% or more, the masterbatch is sufficiently dispersed in the adhesive resin layer 15. When the concentration of the masterbatch in the adhesive resin layer forming resin composition is 50 mass% or less, the masterbatch is sufficiently dispersed by mixing during extrusion, and defects such as film breakage are less likely to occur.

When the adhesive resin layer 15 is formed, the adhesive resin layer forming resin composition preferably further contains a dispersant. In this case, the dispersant enables the hydrophobic insulating inorganic filler to have higher dispersibility, and more easily prevents deterioration in function (e.g., adhesion strength or the like) of the adhesive resin layer 15.

The dispersant may be, for example, a surfactant such as metal soap (zinc stearate or the like). When the resin contains a modified polyolefin resin, the modified polyolefin resin can serve as a dispersant.

The method of forming the sealant layer 16 is the same as the method of forming the sealant layer 16 in the method of producing the packaging material 10.

In this step, a second laminate is obtained in which the substrate layer 11, the first adhesive layer 12a, the first anticorrosion treatment layer 14a, the metal layer 14c, the second anticorrosion treatment layer 14b, the adhesive resin layer 15, and the sealant layer 16 are laminated in this order as shown in Fig. 2.

### (Heat treatment step)

In this step, the second laminate is heat treated. Heat treatment of the second laminate can improve the adhesion between the metal layer 14c, the second anticorrosion treatment layer 14b, the adhesive resin layer 15, and the sealant layer 16. In the heat treatment, the second laminate is preferably heat treated at a temperature of not less than the melting point of the adhesive resin layer 15.

In this manner, the packaging material 20 shown in Fig. 2 can be produced.

### [Power storage device]

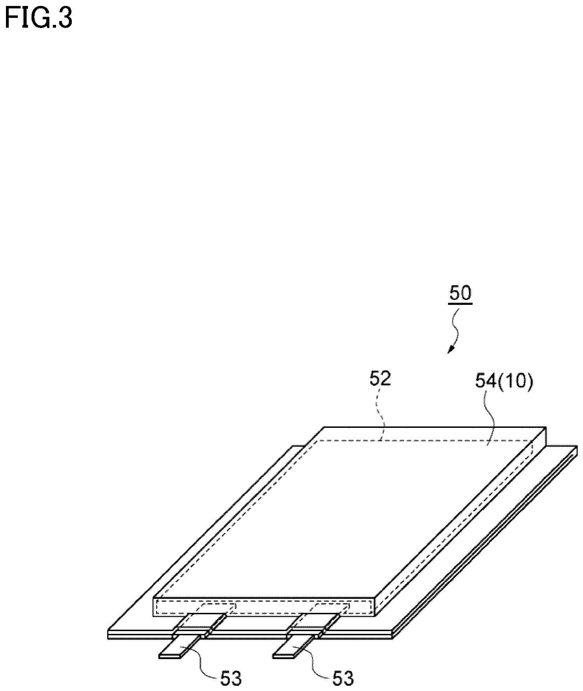

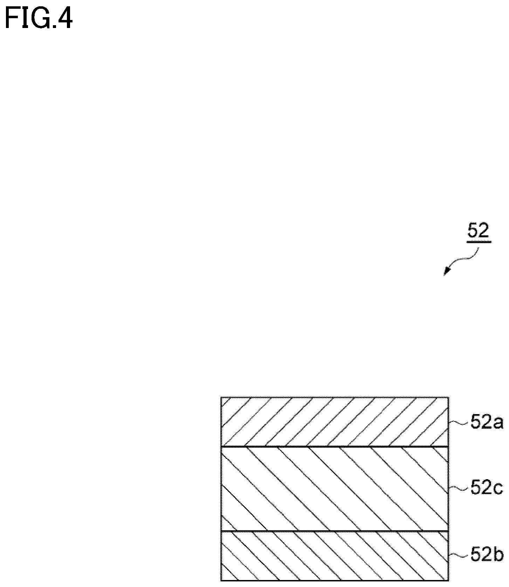

Next, an embodiment of the power storage device of the present disclosure will be described with reference to Figs. 3 and 4. Fig. 3 is a perspective view of the embodiment of the power storage device of the present disclosure, and Fig. 4 is a cross-sectional view of a battery cell in Fig. 3.

As shown in Fig. 3, a power storage device 50 includes a battery cell 52, and a packaging bag 54 that houses the battery cell 52. The power storage device 50 may further include two metal terminals (current output terminals) 53 that extend from the battery cell 52 and externally output an electric current from the power storage element 52. The two metal terminals 53 are held by the packaging bag 54.

As shown in Fig. 4, the battery cell 52 includes a positive electrode 52a, an electrolyte 52c, and a negative electrode 52b in this order.

The packaging bag 54 includes the packaging material 10. In the packaging material 10, the substrate layer 11 is the outermost layer, and the sealant layer 16 is the innermost layer. The packaging bag 54 is formed by folding a single packaging material 10 in two or stacking two packaging materials 10 so that the substrate layer 11 faces outside the power storage device 50 and the sealant layer 16 faces inside the power storage device 50, followed by heat sealing of the edge portion of the packaging material 10 or the two packaging materials 10.

The metal terminals 53 are held by the edge portion of the packaging bag 54. The metal terminals 53 may be held by the packaging material 10 via a tab sealant.

The power storage device 50 has good insulating properties when the packaging material 10 is used as the packaging bag 54 under heat and pressure; thus, it is possible to prevent a short circuit between the positive electrode 52a or the negative electrode 52b of the battery cell 52 and the metal layer 14c of the packaging material 10 even if the power storage device 50 is heated while pressure is applied in a direction perpendicular to the interface between the battery cell 52 and the packaging material 10.

The electrolyte 52c may be, for example, a solid electrolyte. In this case, the power storage device 50 is a solid-state battery. Examples of the solid electrolyte include an oxide solid electrolyte and a sulfide solid electrolyte.

The metal terminals 53 are part of a current collector extended externally from the packaging material 10, and are composed of a metal foil such as a copper foil or an aluminum foil.

The power storage device 50 may include the packaging material 20 instead of the packaging material 10.

### [Examples]

In the following, the present disclosure will be more specifically described by way of examples. However, the present disclosure is not limited to the following examples.

### [Materials used]

Materials used in the examples and comparative examples are as follows.

### <Substrate layer>

A nylon (Ny) film (manufactured by Toyobo Co., Ltd.) having a thickness of 15 µm was used.

### <First adhesive layer forming composition>

As a first adhesive layer forming composition, a polyurethane adhesive (manufactured by Toyo Ink Co., Ltd.) containing a polyester polyol base resin and a tolylene diisocyanate adduct curing agent was used.

### <Materials for forming first anticorrosion treatment layer (substrate layer side) and second anticorrosion treatment layer (sealant layer side)>

The following materials (CL-1) and (CL-2) were used as materials for forming a first anticorrosion treatment layer (substrate layer side) and a second anticorrosion treatment layer (sealant layer side).
(CL-1): "Sodium polyphosphate-stabilized cerium oxide sol" obtained by adjusting solid content concentration to 10 mass% using distilled water as solvent

The sodium polyphosphate-stabilized cerium oxide sol was obtained by mixing 10 parts by mass of Na salt of phosphoric acid with respect to 100 parts by mass of cerium oxide.
(CL-2): Composition composed of 90 mass% of "polyallylamine (manufactured by Nitto Boseki Co., Ltd.)" obtained by adjusting solid content concentration to 5 mass% using distilled water as solvent and 10 mass% of "polyglycerol polyglycidyl ether (manufactured by Nagase Chemtex Corporation)"

### <Metal layer>

Annealed and degreased soft aluminum foil (manufactured by Toyo Aluminium K.K., 8079) having a thickness of 40 µm was used.

### <Adhesive layer forming composition>

As an adhesive layer forming composition, a second adhesive layer forming composition (adhesive) and an adhesive resin layer forming resin composition (adhesive resin) were prepared as follows.

### (Second adhesive layer forming composition)

The second adhesive layer forming composition was prepared by dispersing the following hydrophobic insulating inorganic filler as necessary in a solvent composed of methylcyclohexane and methyl ethyl ketone, and then adding the following acid-modified polyolefin resin-containing liquid, polyfunctional isocyanate compound-containing liquid, and carbodiimide compound-containing liquid.

### (Adhesive resin layer forming resin composition)

The adhesive resin layer forming resin composition was prepared by dispersing the following hydrophobic insulating inorganic filler as necessary in an adhesive resin (random polypropylene (PP)-based acid-modified polypropylene resin composition, manufactured by Mitsui Chemicals, Inc.) using a twin-screw extruder.

(1) Acid-modified polyolefin resin containing liquid
   Manufactured by Nippon Paper Industries Co., Ltd., product name: 150S, acid-modified polyolefin resin: maleic anhydride-modified polypropylene
(2) Polyfunctional isocyanate compound containing liquid
   Manufactured by Tosoh Corporation, product name: Coronate HXR, polyfunctional isocyanate compound: hexamethylene diisocyanate (HDI) polyisocyanurate resin
(3) Carbodiimide compound containing liquid
   Manufactured by Nisshinbo Chemical Inc., product name: V-03
(4) Hydrophobic insulating inorganic filler
   A: Hydrophobic silica filler (trade name "Sylophobic 100", manufactured by Fuji Silysia Chemical Ltd., average particle size: 2.7 µm, surface treated with organosilicon compound)
   B: Hydrophobic silica filler (trade name "Sylophobic 704", manufactured by Fuji Silysia Chemical Ltd., average particle size: 6.2 µm, surface treated with organosilicon compound)
   C: Hydrophobic silica filler (trade name "Sylophobic 4004", manufactured by Fuji Silysia Chemical Ltd., average particle size: 8.0 µm, surface treated with organosilicon compound)

### <Sealant layer forming resin composition>

A sealant layer forming resin composition containing a polypropylene-polyethylene random copolymer (manufactured by Prime Polymer Co., Ltd., trade name: F744NP) was prepared using a twin-screw extruder.

### [Preparation of packaging material]

### (Example 1)

Firstly, first and second anticorrosion treatment layers were formed on the respective surfaces of a metal layer by the following procedure. That is, the material (CL-1) was applied to both surfaces of the metal layer by micro gravure coating so that the dry coating weight of the material (CL-1) was 70 mg/m², followed by baking at 200°C in a drying unit, thereby obtaining a first layer. Then, the material (CL-2) was applied onto the obtained first layer by micro gravure coating so that the dry coating weight of the material (CL-2) was 20 mg/m², thereby obtaining a second layer. Thus, composite layers composed of the first layer and the second layer were formed as the first anticorrosion treatment layer and the second anticorrosion treatment layer on the respective surfaces of the metal layer, thereby obtaining a barrier layer. The two materials (CL-1) and (CL-2) were combined to form the composite layers having anticorrosion properties.

Next, the first anticorrosion treatment layer of the barrier layer obtained as described above was bonded to the substrate layer by dry lamination using the first adhesive layer forming composition (polyurethane adhesive). Specifically, to laminate the barrier layer and the substrate layer, the polyurethane adhesive was applied onto the surface of the first anticorrosion treatment layer facing away from the metal layer so that the thickness of the polyurethane adhesive after curing was 5 µm, and dried at 80°C for 1 minute, followed by lamination of the substrate layer on the polyurethane adhesive and aging at 60°C for 72 hours. Thus, the first laminate including the barrier layer and the substrate layer was obtained.

Then, the first laminate obtained as described above was placed in an unwinding unit of an extrusion laminator, and the second adhesive layer forming composition was applied onto the second anticorrosion treatment layer so that the thickness of the second adhesive layer forming composition after curing was 20 µm, and dried at 100°C for 1 minute, followed by lamination with the sealant layer and aging at 40°C for 72 hours. In the second adhesive layer forming composition, the type, content, and average particle size of the hydrophobic insulating inorganic filler in the total solid content (adhesive layer (second adhesive layer)) were as shown in Table 1. The sealant layer was prepared by extruding the sealant layer forming resin composition under processing conditions of 270°C and 100 m/min.

Thus, a packaging material (substrate layer, first adhesive layer, first anticorrosion treatment layer, metal layer, second anticorrosion treatment layer, second adhesive layer, and sealant layer) was prepared.

### (Example 2)

A first laminate including a barrier layer and a substrate layer was obtained in the same manner as in Example 1.

Then, the first laminate obtained as described above was placed in an unwinding unit of an extrusion laminator, and the adhesive resin composition and the sealant layer forming resin composition were coextruded onto the second anticorrosion treatment layer under processing conditions of 270°C and 100 m/min to laminate the adhesive resin layer (thickness: 20 µm) and the sealant layer (thickness: 60 µm) in this order, thereby obtaining a second laminate. In the adhesive resin composition, the type, content, and average particle size of the hydrophobic insulating inorganic filler were as shown in Table 1.

The second laminate obtained in this manner was heat treated so that the maximum temperature reached by the second laminate was 190°C. Thus, a packaging material (substrate layer, first adhesive layer, first anticorrosion treatment layer, metal layer, second anticorrosion treatment layer, adhesive resin layer, and sealant layer) was prepared.

### (Examples 3 and 4)

A packaging material (substrate layer, first adhesive layer, first anticorrosion treatment layer, metal layer, second anticorrosion treatment layer, second adhesive layer, and sealant layer) was prepared in the same manner as in Example 1 except that in the second adhesive layer forming composition, the type, content, and average particle size of the hydrophobic insulating inorganic filler in the total solid content were as shown in Table 1 and that in the second adhesive layer forming composition, the amount of polyfunctional isocyanate compound with respect to 100 parts by mass of acid-modified polyolefin was 1 part by mass as shown in Table 1.

### (Comparative Example 1)

A packaging material (substrate layer, first adhesive layer, first anticorrosion treatment layer, metal layer, second anticorrosion treatment layer, second adhesive layer, and sealant layer) was prepared in the same manner as in Example 1 except that in the second adhesive layer forming composition, the content of hydrophobic insulating inorganic filler in the total solid content was 0 mass% as shown in Table 1 and that in the second adhesive layer forming composition, the amount of polyfunctional isocyanate compound with respect to 100 parts by mass of acid-modified polyolefin was 0 parts by mass as shown in Table 1 and that the MFR of the sealant layer was 30 g/10 min as shown in Table 1.

### (Comparative Example 2)

A packaging material (substrate layer, first adhesive layer, first anticorrosion treatment layer, metal layer, second anticorrosion treatment layer, adhesive resin layer, and sealant layer) was prepared in the same manner as in Example 2 except that the content of hydrophobic insulating inorganic filler in the adhesive resin composition was 0 mass% as shown in Table 1 and that in the second adhesive layer forming composition, the amount of polyfunctional isocyanate compound with respect to 100 parts by mass of acid-modified polyolefin was 0 parts by mass as shown in Table 1 and that the MFR of the sealant layer was 30 g/10 min as shown in Table 1.

### <Evaluation>

### (1) Heat sealability

### (1-1) Preparation of samples

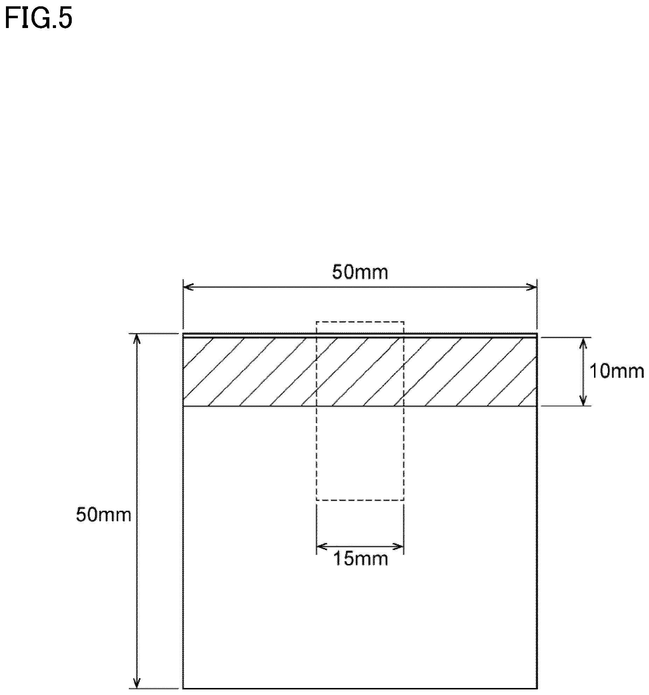

Each of the packaging materials obtained in Examples 1 to 4 and Comparative Examples 1 and 2 was cut to obtain a cut piece with a size of 50 mm (TD direction) × 100 mm (MD direction). On the cut piece, an aluminum foil piece with a size of 50 mm × 50 mm cut from an aluminum foil subjected to chemical conversion treatment was placed, and the cut piece was folded in two so that the aluminum foil piece was sandwiched between the folded portions of the cut piece, and an end portion of the cut piece with a width of 10 mm on the side opposite to the fold (crease) was heat sealed at 180°C and 0.6 MPa for 10 seconds. Then, the piece was cut in the MD direction to obtain a piece with a width of 15 mm including a center portion of the heat sealed portion in the longitudinal direction (TD direction) (see Fig. 5), thereby preparing a sample.

### (1-2) Sealing strength (room temperature)

The samples prepared as described above were subjected to a T-peel test for peeling-off of the packaging material and the aluminum foil subjected to chemical conversion treatment, using a tensile tester (manufactured by Shimadzu Corporation) in a room temperature (25°C) environment under conditions of a tensile speed of 50 mm/min, and the sealing strength (burst strength) was measured.

### (1-3) Evaluation

From the sealing strength (burst strength) obtained in (1-2), the heat sealability of the samples was determined based on the following criteria. The results of the sealing strength and the evaluation are shown in Table 2.

### (Criteria)

A: Sealing strength was 20 N/15 mm or more
B: Sealing strength was 15 N/15 mm or more and less than 20 N/15 mm
C: Sealing strength was less than 15 N/15 mm

### (2) Adhesion

Each of the packaging materials obtained in Examples 1 to 4 and Comparative Examples 1 and 2 was cut to prepare a sample with a width of 15 mm and a length of 120 mm. Then, the samples were subjected to a T-peel test for peeling-off of a portion between the metal layer and the sealant layer using a tensile tester (manufactured by Shimadzu Corporation) in a room temperature environment under conditions of a tensile speed of 50 mm/min, and the lamination strength was measured. From the obtained lamination strength, the adhesion between the metal layer and the sealant layer was determined based on the following criteria. The results of the lamination strength and the determination are shown in Table 2.

### (Criteria)

A: Lamination strength was 10 N/15 mm or more, or unpeelable
B: Lamination strength was 3 N/15 mm or more and less than 10 N/15 mm
C: Lamination strength was less than 3 N/15 mm

### (3) Insulating properties after application of heat and pressure

Each of the packaging materials obtained in Examples 1 to 4 and Comparative Examples 1 and 2 was cut to obtain a sample with a size of 100 mm × 100 mm. The sample was sandwiched between two electrodes with a size of 20 mm × 20 mm, and heat and pressure were applied for 24 hours under conditions of 150°C and 3 MPa, followed by measurement of the breakdown voltage in a direction perpendicular to the surface of the sample. From the measured breakdown voltage, the insulating properties of the packaging materials after application of heat and pressure were determined based on the following criteria. The results are shown in Table 2.

### (Criteria)

Good: Breakdown voltage was 50 V or more
Poor: Breakdown voltage was less than 50 V

**[Table 1]**

| | Packaging material | | | | | |
|---|---|---|---|---|---|---|
| | Adhesive layer (second adhesive layer) | | | | | Sealant layer |
| | Type | Polyfunctional isocyanate compound | Hydrophobic insulating inorganic filler | | | MFR (g/10 min) |
| | | Mass | Type | Content (mass%) | Average particle size (µm) | |
| Example 1 | Adhesive | 0 | A | 5 | 2.7 | 10 |
| Example 2 | Adhesive resin | 0 | A | 5 | 2.7 | 10 |
| Example 3 | Adhesive | 1 | B | 5 | 6.2 | 10 |
| Example 4 | Adhesive | 1 | C | 5 | 8.0 | 10 |
| Comparative Example 1 | Adhesive | 0 | - | 0 | - | 30 |
| Comparative Example 2 | Adhesive resin | 0 | - | 0 | - | 30 |

**[Table 2]**

| | Evaluation | | | | | |
|---|---|---|---|---|---|---|
| | Heat sealability | | Adhesion | | Insulating properties after application of heat and pressure (150°C, 5 MPA, 24h) | |
| | Determination | Sealing strength (room temperature) (N/15 mm) | Determination | Lamination strength (N/15 mm) | Determination | Breakdown voltage |
| Example 1 | A | 34 | A | Unpeelable | Good | More than 100 V |
| Example 2 | A | 35 | A | Unpeelable | Good | More than 100 V |
| Example 3 | A | 33 | A | Unpeelable | Good | More than 100 V |
| Example 4 | A | 33 | A | Unpeelable | Good | More than 100 V |
| Comparative Example 1 | A | 32 | A | Unpeelable | Poor | Less than 10 V |
| Comparative Example 2 | A | 35 | A | Unpeelable | Poor | Less than 10 V |

The results in Table 2 show that in Examples 1 to 4, the breakdown voltage after application of heat and pressure was greater than 100 V, but in Comparative Examples 1 and 2, the breakdown voltage after application of heat and pressure was less than 10 V.

The results confirmed that the power storage device packaging material of the present disclosure has good insulating properties when the packaging material is used as a packaging bag in a power storage device under heat and pressure.

The summary of the present disclosure is as follows.
[1] A power storage device packaging material for a power storage device, the power storage device packaging material at least including a substrate layer, a barrier layer including a metal layer, an adhesive layer, and a sealant layer in this order, wherein the adhesive layer contains a hydrophobic insulating inorganic filler.
[2] The power storage device packaging material according to [1], wherein the adhesive layer is composed of a composition containing the hydrophobic insulating inorganic filler, the composition containing the hydrophobic insulating inorganic filler, a resin, and a polyfunctional isocyanate compound, and the resin is a modified polyolefin resin.
[3] The power storage device packaging material according to [1] or [2], wherein the sealant layer has an MFR of 20 g/10 min or less.
[4] The power storage device packaging material according to any of [1] to [3], wherein the sealant layer has a melting point of 160°C or higher.
[5] The power storage device packaging material according to any of [1] to [4], wherein the hydrophobic insulating inorganic filler has an average particle size of 1 to 20 µm.
[6] The power storage device packaging material according to any of [1] to [5], wherein a breakdown voltage after heat and pressure are applied for 24 hours under conditions of 150°C and 3 MPa is 100 V or more.
[7] The power storage device packaging material according to [2], wherein the modified polyolefin resin is an acid-modified polyolefin resin.
[8] The power storage device packaging material according to [2], wherein the polyfunctional isocyanate compound contains an isocyanurate-type polyfunctional isocyanate compound.
[9] The power storage device packaging material according to any of [1] to [8], wherein a content of the hydrophobic insulating inorganic filler in the adhesive layer is 0.5 to 20 mass%.
[10] The power storage device packaging material according to any of [1] to [9], wherein the barrier layer further includes an anticorrosion treatment layer on one or both surfaces of the metal layer.
[11] The power storage device packaging material according to any of [1] to [10], further including a first adhesive layer between the substrate layer and the barrier layer, wherein the adhesive layer is a second adhesive layer, and a thickness of the second adhesive layer is greater than a thickness of the first adhesive layer.
[12] The power storage device packaging material according to any of [1] to [11], wherein the power storage device is a solid-state battery.
[13] A power storage device including: a battery cell that includes a positive electrode, an electrolyte, and a negative electrode in this order; and a packaging bag that houses the battery cell, wherein the packaging bag includes the power storage device packaging material according to any of [1] to [11].
[14] The power storage device according to [13], wherein the power storage device is a solid-state battery.

### [Reference Signs List]

- 10, 20: Packaging material (power storage device packaging material),
- 11: Substrate layer,
- 12b: Second adhesive layer (adhesive layer),
- 13: Barrier layer,
- 14a: First anticorrosion treatment layer (anticorrosion treatment layer),
- 14b: Second anticorrosion treatment layer (anticorrosion treatment layer)
- 14c: Metal layer,
- 15: Adhesive resin layer (adhesive layer, second adhesive layer),
- 16: Sealant layer,
- 50: Power storage device,
- 52: Battery cell,
- 52a: Positive electrode,
- 52b: Negative electrode,
- 52c: Electrolyte,
- 54: Packaging bag.

## Claims

1. A power storage device packaging material for a power storage device, the power storage device packaging material at least comprising
a substrate layer, a barrier layer including a metal layer, an adhesive layer, and a sealant layer in this order, wherein
the adhesive layer contains a hydrophobic insulating inorganic filler.

2. The power storage device packaging material according to claim 1, wherein
the adhesive layer is composed of a composition containing the hydrophobic insulating inorganic filler, the composition containing the hydrophobic insulating inorganic filler, a resin, and a polyfunctional isocyanate compound, and
the resin is a modified polyolefin resin.

3. The power storage device packaging material according to claim 1, wherein
the sealant layer has an MFR of 20 g/10 min or less.

4. The power storage device packaging material according to claim 1, wherein the sealant layer has a melting point of 160°C or higher.

5. The power storage device packaging material according to claim 1, wherein
the hydrophobic insulating inorganic filler has an average particle size of 1 to 20 µm.

6. The power storage device packaging material according to claim 1, wherein
a breakdown voltage after heat and pressure are applied for 24 hours under conditions of 150°C and 3 MPa is 100 V or more.

7. The power storage device packaging material according to claim 2, wherein
the modified polyolefin resin is an acid-modified polyolefin resin.

8. The power storage device packaging material according to claim 2, wherein
the polyfunctional isocyanate compound contains an isocyanurate-type polyfunctional isocyanate compound.

9. The power storage device packaging material according to claim 1, wherein
a content of the hydrophobic insulating inorganic filler in the adhesive layer is 0.5 to 20 mass%.

10. The power storage device packaging material according to claim 1, wherein
the barrier layer further includes an anticorrosion treatment layer on one or both surfaces of the metal layer.

11. The power storage device packaging material according to claim 1, further comprising a first adhesive layer between the substrate layer and the barrier layer, wherein
the adhesive layer is a second adhesive layer, and
a thickness of the second adhesive layer is greater than a thickness of the first adhesive layer.

12. The power storage device packaging material according to claim 1, wherein
the power storage device is a solid-state battery.

13. A power storage device comprising:
a battery cell that includes a positive electrode, an electrolyte, and a negative electrode in this order; and
a packaging bag that houses the battery cell, wherein
the packaging bag includes the power storage device packaging material according to any one of claims 1 to 11.

14. The power storage device according to claim 13, wherein
the power storage device is a solid-state battery.
